(19)

Europäisches
Patentamt
European
Patent Office
Office européen
des brevets

(11) **EP 1 862 759 A1**

(12) **EUROPEAN PATENT APPLICATION**

(43) Date of publication:
**05.12.2007 Bulletin 2007/49**

(51) Int Cl.:
***G01B 9/02*** *(2006.01)*

(21) Application number: **07100913.8**

(22) Date of filing: **22.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.05.2006 EP 06010997**

(71) Applicant: **Medizinische Universität Innsbruck 6020 Innsbruck (AT)**

(72) Inventors:
- **Munck, Sebastian Dr.**
  **6067 Absam (AT)**
- **Walter, Joachim Dr.**
  **81539 München (DE)**

(74) Representative: **Vossius & Partner**
  **Siebertstrasse 4**
  **81675 München (DE)**

(54) **Multiwavelength interference reflection microscopy**

(57)    The present invention provides a method for reconstruction a topology of a sample using multiwavelength interference microscopy, the method comprising the steps of disposing the sample on a transparent cover slip, illuminating the sample through the cover slip using light of at least three different wavelengths, measuring the intensity of the reflected tight produced by interference of light reflected from the surface of the sample and light reflected from the cover slip, reconstructing the distance between the surface of the sample and the cover slip by deriving unit-free terms for the at least three different wavelengths from the measured intensities, thereby cancelling out the reflective index of the surface of the sample. Furthermore, a device for carrying out the method according to the method of the invention is provided.

EP 1 862 759 A1

**Description**

The present invention relates to microinterferometric techniques for investigating the topology of a sample, in particular cellular membranes.

Microinterferometric techniques, such as interference reflection microscopy (IRM/RICM) are used in combination with other microscopy techniques, such as confocal microscopy, for studying the structure and shape of complex samples, such as biological samples. These techniques are used, for example, when investigating the dynamics of adhesion, for example, adhesion dynamics of fibroblasts and beads on several surfaces. However, since RICM is an interferometric method, the theoretical resolution in the direction parallel with the viewing direction (z-direction) is expected to be much better than that of a confocal microscope. There have been several attempts to study objects with known shape using the reoccurring interference patterns in interference reflection microscopy to deduce information in the z-direction. However, so far these reoccurring interference patterns have hampered a correct interpretation of irregularly shaped specimen like the membrane topology of cells. It was further shown that the reflection coefficient within a cell and especially at adhesion sides can vary.

However, recent advances in interference reflection microscopy techniques have shown that absolute distance measurements are possible with the application of more wavelengths and a quantitative image analysis. In particular, Schilling, J. et al. have reported in Physical Review E, 69(2004)219001 on absolute interfacial distance measurements by dual-wavelength reflection interference contrast microscopy.

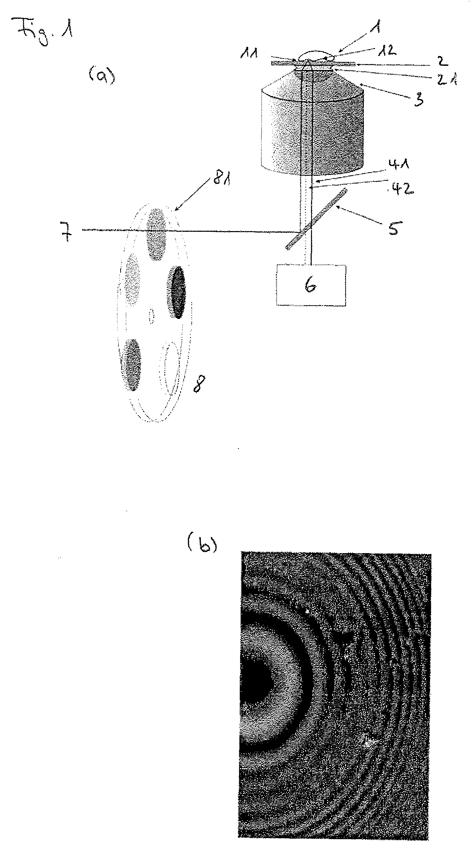

A setup for using this technique is shown in Fig. 1(a). A sample 1 is arranged on a transparent cover slip 2 and illuminated through the cover slip 2 using, for example, a Hg-himp 7. Two different wavelengths for the illumination are used which are filtered out of the illumination light using a filter wheel 8 carrying monochromatic filters 81. The sample 1, which may be a cell with a membrane having a high refractive index is in direct contact with the cover slip 2 at certain adhesion points 11. In certain regions, a space 12 is present between the cover slip 2 and the sample 1, the space 12 having a low refractive index. In case the sample is not in contact with the cover slip, a relative reconstruction of the scope of the sample may be performed. Using a beam splitter 5 and a camera 6, the interference of a light beam 41 reflected from the cell and light beam 42 reflected from the cover slip 2 can be observed by a camera 6 through an objective lens 3. The camera 6 may be a CCD camera, a photomultiplier, a CMOS device or a photodiode. By analyzing the measured intensities of the reflected light, the distance between the surface of the cover slip and the sample can be measured.

According to the publication of Schilling et al., the intensity distribution of the interference pattern for a given wavelength with the intensity I(h(x,y),λ,) on the interferogram corresponding to a point whose lateral position is defined by the coordinates (x,y) and the height is given by h(x,y) with h being the refractive index of the medium and δ the phase shift of the light reflected from the object is given by:

$$I(h(x,y),\lambda) = I_1 + I_2 + 2\sqrt{I_1 I_2}\cos(\frac{4\pi n h(x,y)}{\lambda} + \delta) \tag{1}$$

As a test object a glass band was chosen as it has a higher refractive index than water and a known shape with a quite moderate roundness so that the topography could be analyzed under controlled condition. The glass bead shows the characteristic Newton fringes (see Fig. 1(b)).

When using the above described method to reconstruct the shape of a sample, there is the problem that the reflection coefficient of the sample can vary locally and especially at focal adhesions (see, e.g. Inagawa, Y., Braun, and P. Fromherz, European Biophysics Journal, 30(2001)17-26). This is particularly the case when studying the cell membrane of living cells. These variations of the reflection coefficient may lead to a misinterpretation of the measured intensities. Therefore, a reliable reconstruction of the shape of the studied sample is not possible.

It is therefore an object of the present invention to provide a method for representing and reconstructing the three-dimensional shape of a sample which is reliable and meaningful. In particular, the method of the invention should correct the differences in the coefficient of reflection when studying cellular processes.

These objects are achieved with the features of the claims.

When reconstructing the distance between the reference plane and the sample according to the method of the present invention, an amplitude reflection coefficient is introduced which is assumed to be constant for a transparent suspension, substrate or cover slip supporting the sample, but which is dependent on the lateral position of the sample which is studied. To correct for differences in the illumination intensity and amplitude in the different wavelengths, factors may be introduced and the images can then be normalized to the respective ratio. Preferably, two factors are introduced: one factor for normalizing the images to each other and determined from the images; and another factor corresponding to the index of refraction of the sample for each pixel and which is eventually cancelled.

Preferably, three different wavelengths are used to correct for the inhomogeneities in the reflection coefficient. From the measured intensity distribution for the three different wavelengths, unit-free quotients can be derived. According to the invention, the three or more different wavelengths may be used either concurrently, i.e., by means of three or more concurrent light beams, or time sequentially, e.g., light beams of different wavelengths used one after the other or by means of a light beam of varying wavelengths.

Using the method of the present invention, a sample can be reconstructed in three dimensions with a resolution better than that of conventional microscopy techniques, such as confocal microscopy. With the method of the invention, the topology and/or differences in the refractive index of a sample can be studied. The method of the invention can advantageously be applied for studying the topology of a cellular membrane, in particular the membrane topology of cellular processes. In general, the method of the present invention can be applied for studying any sample having a certain height from the cover slip or a refractive index wherein the height and/or the refractive index may vary. Furthermore, the method allows a reliable determination of contact points and adhesions, since ambiguities and uncertainties are cancelled out.

Thus, using the method of the present invention, three-dimensional reconstructions based on interference reflection microscopy is not only possible of homogenous specimen like beads or vesicles, but also for membranes of cellular processes like neuronal growth cones. Due to corrections in the refractive index of the specimen, e.g., the membrane, even dynamics can be measured.

The present invention further provides a device for carrying out the method of the invention which may be, e.g., a confocal microscope.

In order to solve the problem of the prior art, that in interference reflection microscopy intensities are measured, but theory is based on amplitudes, the pictures are normalized to their minimum and maximum and consequently a unit-free term is generated according to the present invention, in which differences in the reflective index are cancelled out.

Reflections from inner membranes may distort the pictures of certain samples but with an adjustment of the aperture and the coherence length this problem can be overcome. It is preferred to use Hg-lines of an HBO Lamp as a light source, but of course other light sources, such as e.g. LEDs, can be used but in the end it depends on the quality of the filter used. Lasers are possible but a short coherence length is advantageous as the picture is less disturbed by reflections from other surfaces.

For the investigation of live growing processes it is desirable to acquire the pictures as fast as possible. One possibility is to use a device to image several wavelengths in parallel on the camera chip as described by Schilling et al. using two cameras. A different possibility is to use a spectral setup as described, for example, by Heitzmann, R., K.A. Lidke, and T.M. Jovin, in Double-pass Fourier transform imaging spectroscopy, Optics Express, 12(2004)753-763 and Messler, P., H. Harz, and R. Uhl in Instrumentation for multi-wavelengths excitation imaging, Journal Of Neuroscience Methods, 69(1996)137-147,

For longer distances a fourth wavelength may be used as the relation of two of the quotients described above result in an ellipsoid, which results in an ambiguity that can be overcome by a denominator with a fourth wavelength.

Using the present invention, a so far unsurpassed z-resolution can be achieved, which makes it possible to highlight the membrane topology over time. Therefore, the method of the invention can be used to investigate the coherences between membrane topology and movement and intracellular signals. Furthermore, a quantitative contribution of individual adhesion molecules can be achieved.

In the following, a more detailed description of the present invention will be given with reference to the accompanying Figures, wherein:

Fig. 1    shows in (a) a setup for investigating a sample using interference reflection microscopy and in (b) the intensity distribution observed using a glass bead as sample at 540 nm;

Fig. 2    shows the calculated intensity distribution of the three quotients used according to the present invention against the distance with the wavelengths 540 nm, 600 nm, and 685 nm using a glass bead as test sample;

Fig. 3    shows in (a), (b) and (c) the intensity distribution of the glass bead calculated with Q1, Q2, and Q3, and in (d) an intensity profile of pictures (a), (b), and (c);

Fig. 4    shows in (a) the phase contrast picture of an neuronal process, (b) shows the Q2 picture of the process shown in (a), and (c) is a reconstruction of the membrane topology of the cellular process shown in (a).

As described above, when applying the method described by Schilling et al. to reconstruct, for example, the membrane topology of a growing cellular process, such a reconstructions does not work properly. This is due to the fact that an enhanced effective thickness of the membrane exists at a focal contact due to the intracellular protein complex.

Thus, IRM is able to detect sensitively the position of focal contact, but does not probe a width of the cleft between the membrane and the substrate, as explained by Iwanaga et al. Thus, the differences in the refractive index of the membrane hamper the correct interpretation of the observed intensity distribution. Therefore, the phase shift and the intensity when investigating cellular processes do not match to the relation (1). The method of the present invention is based on the idea to eliminate the differences in the refractive index by applying more wavelength, transforming the intensities into a unit-free term and cancelling out the refractive index.

Consequently, according to the present invention, an amplitude reflection coefficient r is introduced; r is assumed to be constant for the cover slip, but dependent on the lateral position for the cell membrane. Furthermore, to correct for differences in illumination intensity and amplitude in the different wavelengths a factor a is introduced and the images are normalized to their respective ratio. The amplitude A is then described as

$$A(h, \lambda) := ar_1 + ar_2 \exp\left[\left[\left(\frac{2\pi}{\lambda}\right)2nh + \pi\right]\right] \tag{2}$$

From this the intensity can be calculated as the squared absolute value of the amplitude:

$$I(h, \lambda) = \left|A(h, \lambda)\right|^2 \tag{3}$$

Plugging (2) into (3) yields

$$I(h(x, y), \lambda) = (ar_1)^2 + (ar_2)^2 + 2a^2 r_1 r_2 \cos\left(\frac{4\pi n h(x, y)}{\lambda} + \pi\right) \tag{4}$$

Three wavelengths are used to correct for the inhomogeneities in the reflection coefficient. From the intensities of the data for the three wavelengths, unit-free quotients of the form

$$Q_{\alpha\beta\gamma} = \frac{I((h(x, y), \lambda_\alpha) - \dfrac{a_\alpha^2}{a_\beta^2} I(h(x, y), \lambda_\beta)}{I(h(x, y), \lambda_\alpha) - \dfrac{a_\alpha^2}{a_\gamma^2} I(h(x, y), \lambda_\gamma)} \tag{5}$$

are derived, where $\dfrac{a_\alpha^2}{a_\beta^2}$ and $\dfrac{a_\alpha^2}{a_\gamma^2}$ have to be determined separately.

As the denominator reaches zero, $Q_{\alpha\beta\gamma}$ contains reoccurring discontinuities which can be avoided by defining the denominator as

$$D = \left[ \left[ I(h, \lambda_a) - \frac{a_\alpha^2}{a_\beta^2} I(h, \lambda_\beta) \right]^2 + \left[ (I(h, \lambda_\alpha) - \frac{a_\alpha^2}{a_\gamma^2} I(h, \lambda_\gamma)) \right]^2 + \left[ \frac{a_\alpha^2}{a_\beta^2} I(h, \lambda_\beta) - \frac{a_\alpha^2}{a_\gamma^2} I(h, \lambda_\gamma) \right]^2 \right]^{\frac{1}{2}} \tag{6}$$

and defining new quotients as

$$Q_1 = \frac{I(h(x,y), \lambda_a) - \frac{a_\alpha^2}{a_\beta^2} I(h(x,y), \lambda_\beta)}{D} \tag{7}$$

$$Q_1 = \frac{I(h(x,y), \lambda_\alpha) - \frac{a_\alpha^2}{a_\gamma^2} I(h(x,y), \lambda_\gamma)}{D} \tag{8}$$

$$Q_1 = \frac{\frac{a_\alpha^2}{a_\beta^2} I(h, \lambda_\beta) - \frac{a_\alpha^2}{a_\gamma^2} I(h, \lambda_\gamma)}{D} \tag{9}$$

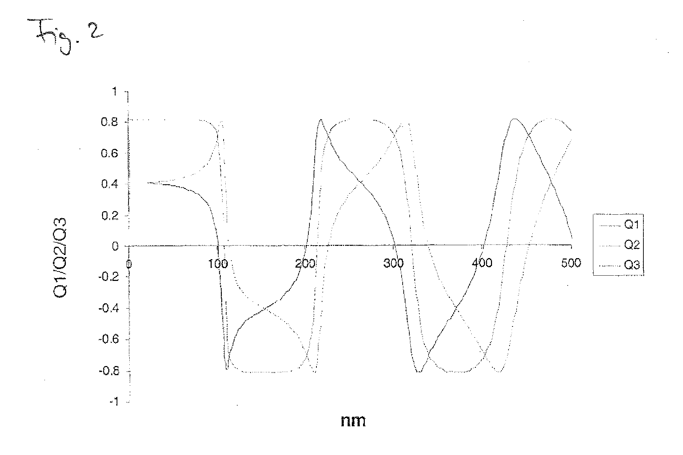

As instructive display of the relations can be seen in Fig. 2 which shows the calculated intensity distribution of the three quotients against the distance with the wavelengths 540 nm, 600 nm, 686 nm used for a glass bead as test sample.

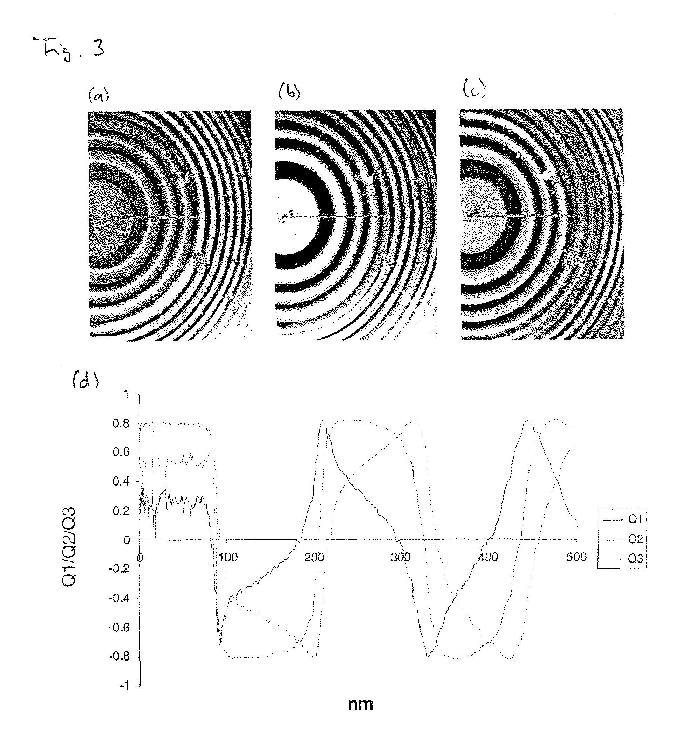

Fig. 3 shows in (a), (b), and (c) the intensity distributions of the glass bead used as test sample calculated with the quotients Q1, Q2, and Q3, respectively. The measured intensity profile of the pictures (a), (b), and (c) is shown in (d). These measured distributions fit nicely to the calculated ones that are shown in Fig. 2.

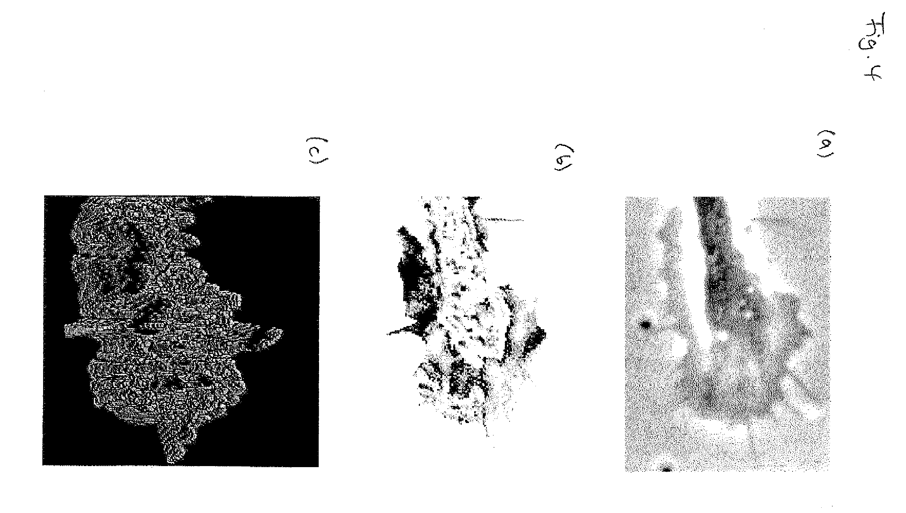

Figs. 4(a) to (c) illustrate measurements of a neuronal growth cone. In (a) the phase contrast picture of this neuronal process is shown. In (b), the quotient picture of the growth cone is shown for the quotient Q2. In (c), a reconstruction of the membrane topology of the cellular process is shown, wherein the heights represent the distance from the cover slip. The membrane surface topology was mapped by applying the relation between Q2 and Q3 and assigning the two intensity pairs to the respective membrane height. This was done for each pixel. As this relation reaches some ambiguity at approximately 250 nm, a fourth wavelength may be applied. This can be used to generate 6 unit-free quotients according to the quotients in equation (6). With a relation between two quotients from different wavelengths trios, which now have a phase shift, the surface topology over greater z-distances can be described. Since the quotients can be solved but may result in rather unhandy terms, look-up tables can be used as an alternative.

The images were acquired using a Zeiss Axiovert 200M equipped with a 63x oil (NA 1.4) Achromat objective lens and a RT Monochromataic camera (diagnostic instruments). The setup was driven by the Metamorph imaging system (Universal Imaging).

A 50/50 beamsplitter was used for reflected light illumination. A HBO lamb was used as light source. Filters in the parallel part of the illumination path were used to create monochromatic light. Instead of using filters, different wavelengths of light may also be produced by dispersion.

As a test object a glass bead was chosen as it has a higher refractive index and a known shape with a quite moderate roundness so the topography could be analyzed under controlled conditions.

The images were analyzed using ImageJ (1.34s National Institutes of Health USA, http://rsb.info.nih.gov/ij) with custom written macros. Models were calculated using Mathcad (13, Mathsoft Engineering & Education, Cambridge, MA) and Excel (Microsoft, Redmond). The surface was modeled with the surfaceJ plugin from Michael Abràmoff (University of Iowa Hospitals and Clinics, Iowa, USA, http://bij.isi.uu.nl/).

Rat B104 cells, originally derived from a CNS neuroplastoma. B104 cells were grown in an incubator (humidified, regulated 8.5% $CO_2$ atmosphere at 37°C) in a "growth medium" consisting of a 1:1 mixture of Dulbecco's Modified Eagle Medium DMEM (Invitrogen, Carlsbad, CA) supplemented for growth with 10% heat-inactivated fetal calf serum and 1% antibiotics (Sigma; 10,000 units penicillin/ml and 10 mg streptomycin/ml). Cultures were passaged once a week at approximately 70-80%, confluence and the growth medium changed every 2 days. B 104 cells were plated at 3,000 cells/cm$^2$ in the growth-supplemented medium on glass bottom tissue-culture dishes (Sarstedt, Newton, NC) coated with poly-D-Iysine (Sigma) and Laminin (Sigma).

A heated stage and a cover were used to conserve optimal the conditions for cell survival and growth of cellular processes.

**Claims**

1. A method for reconstruction a topology of a sample (1) using multiwavelength interference microscopy, the method comprising the steps of:

    disposing the sample (1) on a transparent cover slip (2),
    illuminating the sample (1) through the cover slip (2) using light of at least three different wavelengths,
    measuring the intensity of the reflected light produced by interference of light reflected from the surface of the sample (1) and light reflected from the cover slip (2),
    reconstructing the distance between the surface of the sample (1) and the cover slip (2) by deriving unit-free terms for the at least three different wavelengths from the measured intensities, thereby cancelling out the reflective index of the surface of the sample (1).

2. The method of claim 1, wherein the surface of the sample (1) is in contact with the cover slip (2) in at least one point.

3. The method of claim 1, wherein when the surface of the sample (1) is not in contact with the cover slip (2), a relative reconstruction is performed.

4. The method of claim 1, 2 or 3, wherein the sample (1) is scanned in a plane perpendicular to the viewing direction, thereby reconstructing the three-dimensional shape of the sample (2).

5. The method of any one of the preceding claims, wherein the sample (1) is illuminated at four or more different wavelengths.

6. The method according to any one of the preceding claims, wherein the sample (1) is simultaneously illuminated with light of the different wavelengths.

7. The method according to any one of claims 1-5, wherein the sample (1) is illuminated with light of the different wavelengths time sequentially.

8. The method according to any one of the preceding claims, wherein the distance is reconstructed by solving the unit-free terms.

9. The method according to claim 8, wherein the unit-free terms are solved using a look-up table.

10. The method according to any of the preceding claims for reconstructing a sample having differences in the refractive index.

11. The method according to any one of the preceding claims for studying the height and/or the refractive index of a sample, wherein the height and/or the refractive index vary.

12. The method according to any one of the preceding claims for reconstructing the topology of a cellular membrane.

13. The method according to any one of the preceding claims for reconstructing the topology of a neuronal growth cone.

**14.** A device for carrying out the method according to the method of any one of the preceding claims.

**15.** The device according to claim 14 comprising said transparent cover slip (2) for supporting the sample (1), an illumination means (7) for illuminating the sample with light of at least three different wavelengths, optics (3,5) for projecting the light onto the sample (1) through the cover slip (2), and a detector (6) for detecting the light reflected from the sample (1).

**16.** The device according to claim 15, wherein the illumination means (7) comprises an Hg-lamp.

**17.** The device according to claim 15, wherein the illumination means (7) comprises an LED.

**18.** The device according to claim 15, 16 or 17 further comprising a filter wheel (8) carrying a monochromatic filter (81) for filtering at least one wavelength from the light emitted by the illumination means (7).

**19.** The device according to claim 15, 16 or 17 further comprising means for producing different wavelengths by dispersion.

**20.** The device according to any one of claims 15 to 19, wherein the optics (3, 5) comprise an objective lens (3) and a beam splitter (5).

**21.** The device according to any one of claims 15 to 20, comprising at least three detectors (6) for detecting the light of the at least three different wavelengths, respectively.

**22.** The device according to claim 21, wherein at least one of the detectors (6) is a CCD camera, a photomultiplier, a CMOS device or a photodiode.

**23.** The device according to any one of claims 14 to 22, wherein the device is a confocal microscope.

Fig. 1

(a)

(b)

8

Fig. 2

Fig. 3

(a)

(b)

(c)

(d)

nm

Fig. 4

(a)

(b)

(c)

**European Patent Office**

## EUROPEAN SEARCH REPORT

Application Number

EP 07 10 0913

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JÖRG SCHILLING: "Absolute interfacial distance measurements by dual-wavelength reflection interference contrast microscopy" PHYSICAL REVIEW E, vol. 69, 12 February 2004 (2004-02-12), XP002447177 * the whole document * | 1-23 | INV. G01B9/02 |
| A | WARNASOORIYA, NILANTHI; KIM, MYUNG K.: "Multi-wavelength phase imaging interference microscopy" THREE-DIMENSIONAL AND MULTIDIMENSIONAL MICROSCOPY: IMAGE ACQUISITION AND PROCESSING XIII, vol. 6090, March 2006 (2006-03), pages 165-172, XP002447178 * the whole document * | 1-23 | |

TECHNICAL FIELDS
SEARCHED      (IPC)

G01B

The present search report has been drawn up for all claims

| Place of search | Date of completion of the search | Examiner |
|---|---|---|
| Berlin | 20 August 2007 | Popovici, Mihai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHILLING, J. et al.** *Physical Review E,* 2004, vol. 69, 219001
- **INAGAWA, Y. ; BRAUN ; P. FROMHERZ.** *European Biophysics Journal,* 2001, vol. 30, 17-26
- **HEITZMANN, R. ; K.A. LIDKE ; T.M. JOVIN.** Double-pass Fourier transform imaging spectroscopy. *Optics Express,* 2004, vol. 12, 753-763
- **MESSLER, P. ; H. HARZ ; R. UHL.** Instrumentation for multi-wavelengths excitation imaging. *Journal Of Neuroscience Methods,* 1996, vol. 69, 137-147